# EUROPÄISCHE PATENTSCHRIFT

(11) **EP 1 398 110 B1**
(45) Veröffentlichungstag und Bekanntmachung des Hinweises auf die Patenterteilung: **26.03.2008**
(21) Anmeldenummer: 02020612.4
(22) Anmeldetag: 13.09.2002
(51) Int. Cl.: B23Q 11/04, B23Q 1/70

(54) **Spindelkopf für eine Werkzeugmaschine**
Spindle Head for a Machine Tool
Tête à Broche pour Machine-Outil

(43) Veröffentlichungstag der Anmeldung: 17.03.2004
(73) Patentinhaber: Maschinenfabrik Berthold Hermle AG, 78559 Gosheim (DE)
(72) Erfinder: Bernhard, Franz-Xaver, 78549 Spaichingen (DE); Schwörer, Tobias, 78598 Königsheim (DE)
(74) Vertreter: Vetter, Hans

(56) Entgegenhaltungen:
- EP-A- 0 755 750
- EP-A- 0 876 873
- EP-A- 1 004 395
- US-A- 5 018 705
- US-A- 6 036 414
- PATENT ABSTRACTS OF JAPAN vol. 012, no. 475 (M-774), 13. Dezember 1988 (1988-12-13) -& JP 63 196347 A (HITACHI LTD), 15. August 1988 (1988-08-15)

## Beschreibung

Die Erfindung betrifft einen Spindelkopf für eine Werkzeugmaschine, gemäß dem Oberbegriff des Anspruchs 1.

Aus der EP-A-1004395 ist ein Spindelkopf mit integriertem Antriebsmotor bekannt, der über zwei Rohrhülsen mit der Spindelhalterung verbunden ist. Die beiden Rohrhülsen sind aneinander durch eine radiale Sicherheitsschraube fixiert, die bei stärkeren Stößen auf den Spindelkopf abschert. Hierdurch kann sich der Spindelkopf durch Relativverschiebung der beiden Rohrhülsen in die Halterung hineinbewegen. Allerdings müssen in diesem Falle die Rohrhülsen ausgetauscht werden, was zu einer relativ aufwändigen und teuren Reparatur führt.

Weitere Spindelköpfe, bei denen der Antriebsmotor im Spindelgehäuse integriert ist, sind beispielsweise aus der DE 10027750 A1, der EP 0780192 B1, der DE 20015568 U1 oder der DE 19937447 A1 bekannt. Die Vorteile dieses Bauprinzips bestehen zum einen in der dadurch sehr kurzen Motorspindel und zum anderen in der einfachen und kostengünstigen Bauweise. Der Nachteil dieser Bauweise besteht darin, dass bei Kollisionen in axialer Richtung, die zu Beschädigungen führen, die gesamte Einheit ausgetauscht werden muss.

Aus der EP 0755750 A1 ist ein Spindelkopf bekannt, bei dem der Antriebsmotor und die Spindel zwei getrennte Baugruppen bilden, die mittels einer axial verschiebbaren Kupplung miteinander verbunden sind. Prinzipiell muss daher bei Kollisionen in axialer Richtung nur der Spindelkopf ausgetauscht bzw. repariert werden. Nachteilig an diesem Konzept ist eine relativ lange Motorspindel, und es ergibt sich durch getrennte Lagerungen von Antriebsmotor und Spindel eine relativ aufwendige Bauweise. Zum Schutz der separaten Spindel bei Kollisionen in axialer Richtung sind zwar Stauchhülsen vorgesehen, jedoch ermöglichen diese lediglich eine Verschiebung der direkt im Spindelkopfgehäuse gelagerten Spindel relativ zu diesem, während der Antriebsmotor fest und unverschiebbar im Spindelkopfgehäuse fixiert ist.

Eine Aufgabe der vorliegenden Erfindung besteht darin, einen Schutz gegen Beschädigung bei Kollisionen in axialer Richtung auch für Spindelköpfe mit Motor-Spindeleinheiten zu schaffen, die im Spindelgehäuse integriert sind.

Diese Aufgabe wird erfindungsgemäß durch einen Spindelkopf mit den Merkmalen des Anspruchs 1 gelöst.

Die Vorteile der Erfindung bestehen insbesondere darin, dass die gesamte, aus Spindel und Antriebsmotor bestehende integrierte Motor-Spindeleinheit durch eine Stauchvorrichtung bei Kollisionen in axialer Richtung geschützt ist. Die Vorteile der integrierten Motor-Spindeleinheit können dadurch mit den Vorteilen einer schützenden Stauchvorrichtung kombiniert werden. Auch die kostengünstige, kurz bauende integrierte Bauweise kann dadurch bei Kollisionen in axialer Richtung wirksam geschützt werden, sodass die Gefahr durch entsprechende Beschädigungen nahezu ausgeschlossen ist. Dabei hat sich wenigstens ein sich ab der vorgebbaren axialen Kraft deformierendes Abstandselement oder Federelement als besonders geeignet erwiesen. Die Staucheinrichtung kann bei einer ersten vorteilhaften Alternative zwischen sich axial gegenüberstehenden Flächen des Spindelgehäuses und des Antriebsmotors angeordnet werden, die sich ab der vorgebbaren axialen Kraft dann durch Deformierung der Staucheinrichtung annähern. In einer zweiten vorteilhaften Alternative ist wenigstens eine axial ausgerichtete, den Antriebsmotor der Motor-Spindeleinheit in axialer Richtung am Spindelgehäuse haltende Halteschraube vorgesehen, deren Kopf sich über die Staucheinrichtung abstützt.

Durch die in den Unteransprüchen aufgeführten Maßnahmen sind vorteilhafte Weiterbildungen und Verbesserungen des im Anspruch 1 angegebenen Spindelkopfes möglich.

Mehrere Halteschrauben können zweckmäßigerweise bei der 2. Alternative über den Umfang des Antriebsmotors verteilt angeordnet sein, wobei entweder jeder Halteschraube eine Stauchhülse zugeordnet ist oder wobei sich die Halteschrauben über ein den Antriebsmotor umgreifendes Ringelement abstützen.

Um auf eine Deformation des Stauchelements entsprechend reagieren zu können, ist in vorteilhafter Weise eine bei einer solchen Deformation ansprechende Schalteinrichtung vorgesehen. Diese wird zweckmäßigerweise durch Sensormittel zur Erfassung einer axialen Relativbewegung zwischen Antriebsmotor und Spindelgehäuse ausgelöst.

In einer vorteilhaften Ausgestaltung ist der Antriebsmotor der Motor-Spindeleinheit mit einer Umfangsnut versehen, in die ein am Spindelgehäuse geführtes Sensorelement eingreift, wobei eine durch Axialverschiebung des Antriebsmotors erzeugte Relativverschiebung des Sensorelements zur Auslösung der Schaltvorrichtung mit dieser verbunden ist.

Die Schaltvorrichtung ist zweckmäßigerweise zur Ausschaltung oder zum Richtungswechsel des Spindelvorschubs oder zur Ausschaltung der gesamten Werkzeugmaschine ausgebildet, um Schäden zu verhindern.

Ausführungsbeispiele der Erfindung sind in der Zeichnung dargestellt und in der nachfolgenden Beschreibung näher erläutert. Es zeigen:
- Figur 1: eine Längsschnittdarstellung eines Spindelkopfes für eine Werkzeugmaschine als erstes Ausführungsbeispiel,
- Figur 2: einen Spindelkopf in entsprechender Darstellung als zweites Ausführungsbeispiel und
- Figur 3: einen Spindelkopf in entsprechender Darstellung als drittes Ausführungsbeispiel.

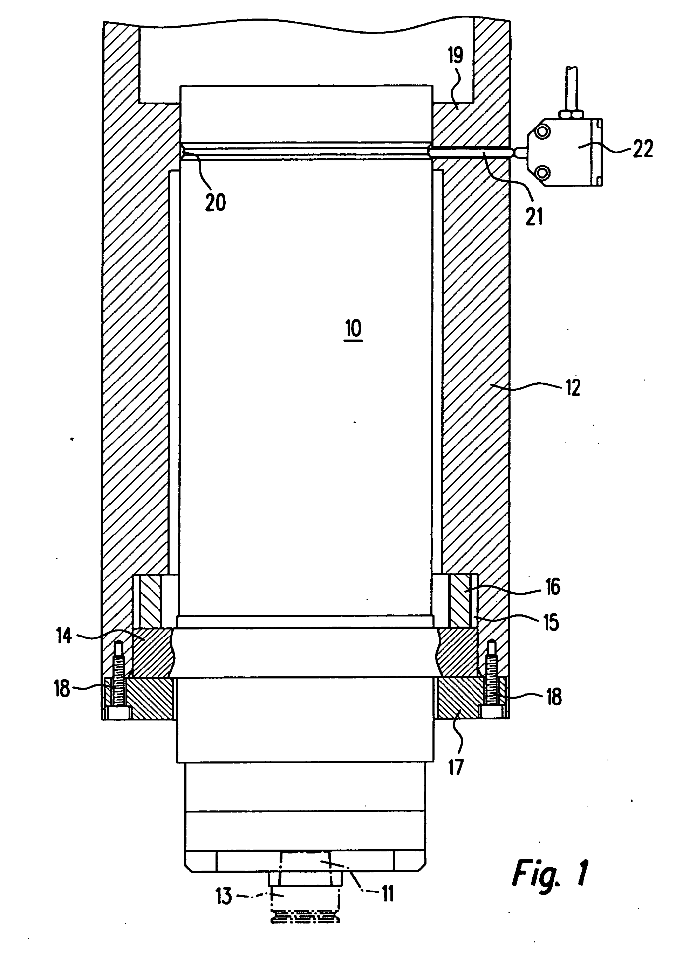

Bei dem in Figur 1 dargestellten ersten Ausführungsbeispiel ist ein Antriebsmotor 10 für eine Spindel 11 zur Aufnahme von Werkzeugen, wie Bohr- oder Fräswerkzeugen, oder Werkstücken oder Werkstückrohlingen in einem zylindrischen Spindelgehäuse 12 längsverschiebbar geführt, also im Falle einer Vertikalspindel vertikal verschiebbar geführt. Die Motorwelle des Antriebsmotors 10 ist dabei als Spindel ausgebildet, das heißt, die Spindel 11 ist im Antriebsmotor 10 unter Bildung einer Motor-Spindeleinheit integriert, wie dies im eingangs angegebenen Stand der Technik an sich bekannt ist. Der Antriebsmotor 10 besitzt an seinem der Werkzeug- oder Werkstückaufnahme 13 der Spindel 11 nahen Bereich einen umfangsseitigen Ringflansch 14, der in eine entsprechende Ringnut 15 an der Innenseite des Spindelgehäuses 12 eingreift. Die axiale Breite der Ringnut 15 ist wesentlich größer als der axiale Durchmesser des Ringflansches 14, sodass prinzipiell eine Axialverschiebung des Antriebsmotors 10 im Spindelgehäuse 12 möglich wäre. Diese Verschiebung verhindert im Normalbetrieb eine Stauchvorrichtung, die als Ringelement 16 in der Ringnut 15 ausgebildet ist und den Ringflansch 14 an einer das Spindelgehäuse 12 abschließenden Ringscheibe 17 hält, die mittels Halteschrauben 18 an der werkzeugseitigen Stirnseite des Spindelgehäuses 12 angebracht ist: Der Antriebsmotor 10 ist durch die Öffnung der Ringscheibe 17 hindurch verschiebbar.

Der werkzeugferne Endbereich des Antriebsmotors 10 wird durch einen radial nach innen reichenden Ringvorsprung 19 des Spindelgehäuses 12 geführt. In diesem Bereich besitzt der Antriebsmotor 10 umfangsseitig eine Ringnut 20, in die radial ein stabförmiges Sensorelement 21 eingreift. Dieses Sensorelement 21 wirkt mit seinem entgegengesetzten Endbereich auf einen Schalter 22 ein. Wenn sich der Antriebsmotor 10 relativ zum Spindelgehäuse 12 axial verschiebt, so wird das stabförmige Sensorelement 21 aus der Ringnut 20 radial nach außen gedrückt und betätigt den Schalter 22.

Die Wirkungsweise der dargestellten Auffahrsicherung besteht darin, dass bei Kollisionen in axialer Richtung, sei es durch Axialverschiebung des Spindelkopfes oder Axialverschiebung des Werkstücks, eine Kraft auf die Spindel 11 und damit auf den Antriebsmotor 10 ausgeübt wird. Ab einer vorgebbaren Kraft wird das als Stauchvorrichtung ausgebildete Ringelement 16 gestaucht, sodass sich die Spindel 11 und damit der Antriebsmotor 10 in das Spindelgehäuse 12 hineinverschieben kann. Dadurch wird in bereits beschriebener Weise der Schalter 22 betätigt, der dadurch entweder den Vorschub des Werkstücks oder des Spindelkopfes abschaltet oder in seiner Richtung umkehrt. Alternativ hierzu kann auch die gesamte Werkzeugmaschine abgeschaltet werden.

Anstelle eines Ringelements 16 als Stauchvorrichtung können selbstverständlich auch anders gestaltete Stauchvorrichtungen im Spalt zwischen dem Ringflansch des Antriebsmotors 10 und dem gegenüberliegenden Wandbereich der Ringnut 15 angeordnet sein. Beispielsweise können auch einzelne Stauchelemente bzw. Stauchhülsen oder Stauchfedern dort angeordnet sein.

Anstelle des stabförmigen Sensorelements 21 und des Schalters 22 können auch andere Sensoreinrichtungen zur Erfassung einer Relativbewegung zwischen Antriebsmotor 10 und Spindelgehäuse 12 vorgesehen sein. Beispielsweise können derartige Sensoreinrichtungen auch zur Sensierung der Verformung der Stauchvorrichtung oder als andere mechanische, optische, magnetische oder elektromagnetische Sensoren ausgebildet sein.

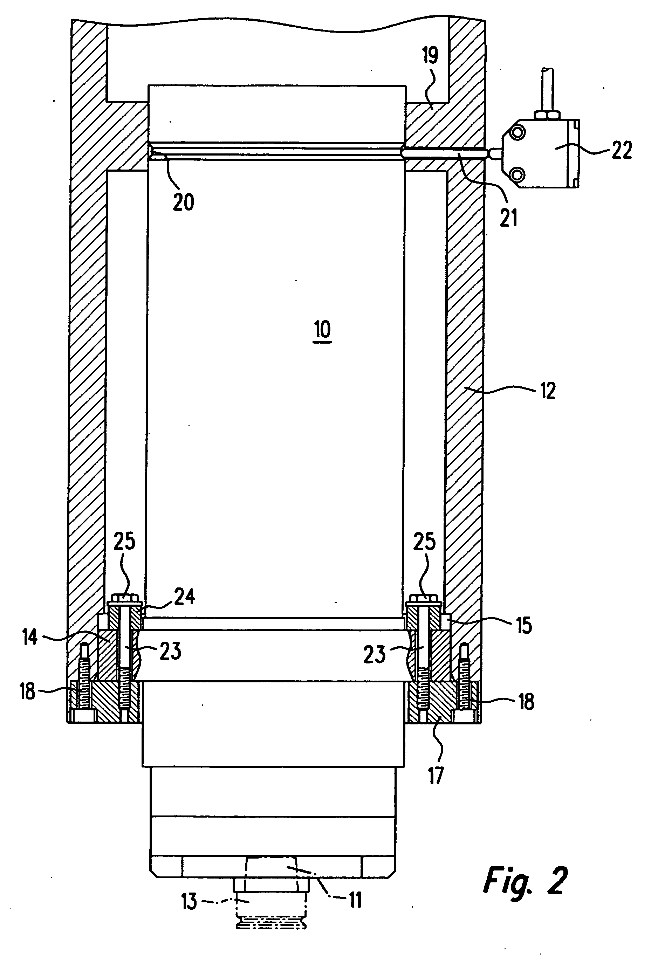

Das in Figur 2 dargestellte zweite Ausführungsbeispiel besitzt einen ähnlichen Grundaufbau. Gleiche oder gleichwirkende Bauteile sind mit denselben Bezugszeichen versehen und nicht nochmals beschrieben. Bei diesem Ausführungsbeispiel ist der Ringflansch 14 am Antriebsmotor 10 mittels Halteschrauben 23 an der Ringscheibe 17 von innen her angeschraubt. Eine kreisringförmige Stauchvorrichtung 24 ist zwischen den Schraubenköpfen 25 der Halteschrauben 23 und dem Ringflansch 14 angeordnet, das heißt, die Schraubenköpfe 25 stützen sich über die Stauchvorrichtung 24 am Ringflansch 14 ab. Anstelle einer kreisringförmigen Stauchvorrichtung 24 kann auch jeder Halteschraube 23 eine hülsenförmige Stauchvorrichtung zugeordnet sein, durch die die Halteschrauben 23 jeweils hindurchgreifen und an denen sich die Schraubenköpfe 25 abstützen. Die kreisringförmige Stauchvorrichtung 24 bzw. die einzelnen hülsenförmigen Stauchvorrichtungen können als irreversibel deformierbare Elemente oder als Federelemente, beispielsweise Tellerfederanordnungen, ausgebildet sein. Dies trifft auch für das erste Ausführungsbeispiel zu.

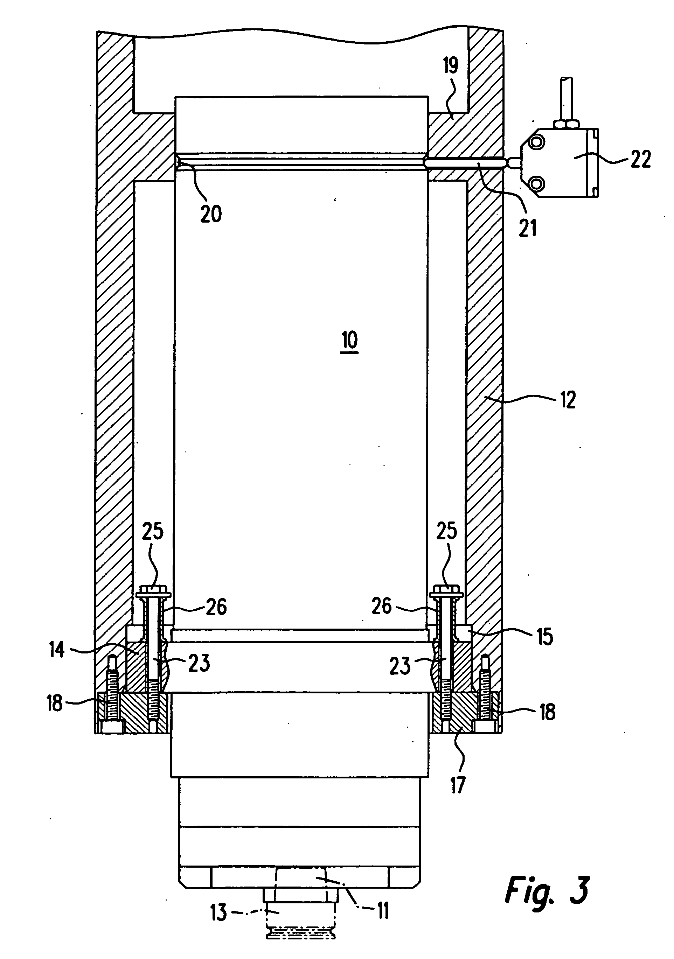

Das in Figur 3 dargestellte dritte Ausführungsbeispiel entspricht weitgehend dem zweiten Ausführungsbeispiel. Anstelle der kreisringförmigen Stauchvorrichtung 24 ist hier jeder Halteschraube 23 eine röhrchenförmige Stauchvorrichtung 26 zugeordnet. Die Halteschrauben 23 greifen durch diese röhrchenförmigen Stauchvorrichtungen 26 hindurch, wobei sich die Schraubenköpfe 25 wiederum an diesen abstützen. Auch hier entspricht die Wirkungsweise der der vorherigen Ausführungsbeispiele.

In Abwandlung der dargestellten Ausführungsbeispiele kann die Stauchvorrichtung selbstverständlich auch im hinteren von der Werkzeug- bzw. Werkstückaufnahme abgewandten oder mittleren Bereich der Motor-Spindeleinheit angeordnet sein.

## Patentansprüche

1. Spindelkopf für eine Werkzeugmaschine, mit einer im Spindelkopf angeordneten Motor-Spindeleinheit mit einem Antriebsmotor (10), dessen Motorwelle als Spindel (11) zur Aufnahme von Werkzeugen oder Werkstücken oder Werkstückrohlingen ausgebildet ist, wobei der Antriebsmotor (10) der Motor-Spindeleinheit in axialer Richtung verschiebbar im Spindelgehäuse (12) angeordnet ist, und wobei eine die axiale Verschiebung des Antriebsmotors (10) in das Spindelgehäuse (12) hinein hemmende Vorrichtung vorgesehen ist, durch die der Antriebsmotor (10) bis zu einer vorgebbaren axialen Kraft in seiner vorgesehenen Arbeitsposition gehalten wird, **dadurch gekennzeichnet, dass** die als Staucheinrichtung (16; 24; 26) ausgebildete Vorrichtung wenigstens ein sich ab der vorgebbaren axialen Kraft deformierendes Abstandselement oder Federelement aufweist, und dass die Staucheinrichtung (16) zwischen sich axial gegenüberstehenden Flächen des Spindelgehäuses (12) und des Antriebsmotors (10) der Motor-Spindeleinheit angeordnet ist oder dass wenigstens eine axial ausgerichtete, den Antriebsmotor (10) in axialer Richtung am Spindelgehäuse (12) haltende Halteschraube (23) vorgesehen ist, deren Kopf (25) sich über die Staucheinrichtung (24; 26) abstützt.

2. Spindelkopf nach Anspruch 1, **dadurch gekennzeichnet, dass** die Staucheinrichtung als den Antriebsmotor (10) umgreifendes Ringelement (16) ausgebildet ist.

3. Spindelkopf nach Anspruch 1, **dadurch gekennzeichnet, dass** mehrere Halteschrauben (23) über den Umfang des Antriebsmotors (10) verteilt angeordnet sind, wobei jeder Halteschraube (23) eine Stauchhülse (26) zugeordnet ist oder wobei sich die Halteschrauben (23) über ein den Antriebsmotor (10) umgreifendes Ringelement (24) abstützen.

4. Spindelkopf nach einem der vorhergehenden Ansprüche, **dadurch gekennzeichnet, dass** eine bei Deformation der Staucheinrichtung (16; 24; 26) ansprechende Schalteinrichtung (22) vorgesehen ist.

5. Spindelkopf nach Anspruch 4, **dadurch gekennzeichnet, dass** Sensormittel (21) zur Erfassung einer axialen Relativbewegung zwischen Antriebsmotor (10) und Spindelgehäuse (12) vorgesehen sind, durch die die Schaltvorrichtung (22) auslösbar ist.

6. Spindelkopf nach Anspruch 5, **dadurch gekennzeichnet, dass** der Antriebsmotor (10) mit einer Umfangsnut (20) versehen ist, in die ein am Spindelgehäuse (12) geführtes Sensorelement (21) eingreift, wobei eine durch Axialverschiebung des Antriebsmotors (10) erzeugte Radialverschiebung des Sensorelements (21) zur Auslösung der Schaltvorrichtung (22) mit dieser verbunden ist.

7. Spindelkopf nach einem der Ansprüche 4 bis 6, **dadurch gekennzeichnet, dass** die Schaltvorrichtung (22) zur Ausschaltung oder Richtungsumkehr des Spindelvorschubs oder des Werkstückvorschubs oder zur Ausschaltung der gesamten Werkzeugmaschine ausgebildet ist.

## Claims

1. Spindle head for a machine tool, with a motor-spindle unit mounted in the spindle head and with a drive motor (10), the motor shaft of which is in the form of a spindle (11) for holding tools or workpieces or work blanks, wherein the drive motor (10) of the motor-spindle unit is mounted so as to be capable of sliding axially in the spindle housing (12), and wherein there is provided a device stopping the axial movement of the drive motor (10) into the spindle housing (12), by means of which the drive motor (10) is held in its planned operating position up to a presettable axial force, **characterised in that** the device in the form of a compression device (16; 24; 26) has one or more spacer elements or spring elements which deform under the presettable axial force, and that the compression device (16) is located between axially opposite surfaces of the spindle housing (12) and the drive motor (10) of the motor-spindle unit, or that there is provided at least one axially aligned locking bolt (23) holding the drive motor (10) axially to the spindle housing (12) and with its head (25) supported over the compression device (24; 26).

2. Spindle head according to claim 1, **characterised in that** the compression device is in the form of a ring element (16) encompassing the drive motor (10).

3. Spindle head according to claim 1, **characterised in that** several locking bolts (23) are distributed over the circumference of the drive motor (10), with each locking bolt (23) being assigned a compression sleeve (26) or with the locking bolts (23) resting on a ring element (24) encompassing the drive motor (10).

4. Spindle head according to any of the preceding claims, **characterised in that** a switching device (22) responding to deformation of the compression device (16; 24; 26) is provided.

5. Spindle head according to claim 4, **characterised in that** sensor means (21) for detecting axial relative movement between the drive motor (10) and the spindle housing (12) are provided, and are able to trigger the switching device (22).

6. Spindle head according to claim 5, **characterised in that** the drive motor (10) is provided with a circumferential slot (20), in which a sensor element (21) guided on the spindle housing (12) engages, while a radial displacement of the sensor element (21) generated by axial movement of the drive motor (10) is connected to it so as to trigger the switching device (22).

7. Spindle head according to any of claims 4 to 6, **characterised in that** the switching device (22) is designed to switch off or to reverse the direction of the spindle feed or the workpiece feed or to switch off the whole machine tool.

## Revendications

1. Tête de broche pour une machine-outil, avec une unité de broche motorisée disposée dans la tête de broche avec un moteur d'entraînement (10), dont l'arbre du moteur est réalisé sous forme de broche (11) pour recevoir des outils ou des pièces à usiner ou des ébauches de pièces, le moteur d'entraînement (10) de l'unité de broche motorisée étant disposé dans le carter de broche (12) de manière mobile dans la direction axiale et un dispositif ralentissant le déplacement axial du moteur d'entraînement (10) dans le carter de broche (12) étant prévu, par lequel dispositif le moteur d'entraînement (10) est maintenu dans sa position de travail prévue jusqu'à ce qu'une force axiale puisse être prédéterminée, **caractérisée en ce que** le dispositif réalisé sous forme de dispositif de compression (16 ; 24 ; 26) présente au moins un élément d'écartement ou élément formant ressort se déformant à partir de la force axiale pouvant être prédéterminée et **en ce que** le dispositif de compression (16) est disposé entre des surfaces se faisant axialement face du carter de broche (12) et du moteur d'entraînement (10) de l'unité de broche motorisée ou **en ce qu'**au moins une vis de retenue (23) retenant le moteur d'entraînement (10) dans la direction axiale au niveau du carter de broche (12) est prévue, dont la tête (25) s'appuie au-dessus du dispositif de compression (24 ; 26).

2. Tête de broche selon la revendication 1, **caractérisée en ce que** le dispositif de compression est réalisé sous forme d'élément annulaire (16) enveloppant le moteur d'entraînement (10).

3. Tête de broche selon la revendication 1, **caractérisée en ce que** plusieurs vis de retenue (23) sont réparties sur la périphérie du moteur d'entraînement (10), une douille de compression (26) étant associée à chaque vis de retenue (23) ou les vis de retenue (23) s'appuyant au-dessus d'un élément annulaire (24) enveloppant le moteur d'entraînement (10).

4. Tête de broche selon l'une quelconque des revendications précédentes, **caractérisée en ce qu'**un dispositif de commutation (22) réagissant à la déformation du dispositif de compression (16 ; 24 ; 26) est prévu.

5. Tête de broche selon la revendication 4, **caractérisée en ce que** des capteurs (21) permettant de saisir un mouvement relatif axial entre le moteur d'entraînement (10) et le carter de broche (12) sont prévus, par lesquels le dispositif de commutation (22) peut être déclenché.

6. Tête de broche selon la revendication 5, **caractérisée en ce que** le moteur d'entraînement (10) est doté d'une rainure périphérique (20), dans laquelle pénètre un capteur (21) guidé au niveau du carter de broche (12), un déplacement radial du capteur (21) généré par déplacement radial du moteur d'entraînement (10) pour déclencher le dispositif de commutation (22) étant associé à celui-ci.

7. Tête de broche selon l'une quelconque des revendications 4 à 6, **caractérisée en ce que** le dispositif de commutation (22) est réalisé pour mettre hors circuit ou inverser le sens de l'avance de la broche ou de l'avance de la pièce ou pour mettre hors circuit l'ensemble de la machine-outil.
